# EUROPEAN PATENT SPECIFICATION

(11) **EP 3 417 961 B1**
(45) Date of publication and mention of the grant of the patent: **27.07.2022**
(21) Application number: 17405009.6
(22) Date of filing: 19.06.2017
(51) Int. Cl.: B29C 64/379, B33Y 10/00, B33Y 80/00, B22F 5/04, B22F 10/28, B22F 10/40, B22F 10/66, B22F 10/68, B29C 64/245, B33Y 30/00, B29C 64/153, B22F 12/30, B29C 64/40

(54) **ADDITIVE MANUFACTURING FIXTURE**
HALTERUNG ZUR GENERATIVEN FERTIGUNG
SUPPORT DE FABRICATION ADDITIVE

(43) Date of publication of application: 26.12.2018
(73) Proprietor: General Electric Company, Schenectady, NY 12345 (US)
(72) Inventor: Haro Gonzalez, Juan Vicente, 5242 Birr (CH); Bobar, Adnan, 5242 Birr (CH); Medved, Danijel, 5242 Birr (CH); Schinkel, Malte Oliver, 5242 Birr (CH); Schwerdtfeger, Jan Vladimir, 5242 Birr (CH)
(74) Representative: Novagraaf Group

(56) References cited:
- EP-A1- 2 848 335
- EP-A1- 3 095 538
- EP-A2- 3 012 062
- WO-A1-2017/093591
- DE-A1-102014 112 446
- US-A1- 2010 034 983
- US-A1- 2015 056 321
- US-A1- 2015 352 770
- US-A1- 2016 031 010
- US-A1- 2016 318 257
- US-A1- 2017 106 594

## Description

### BACKGROUND OF THE INVENTION

The disclosure relates generally to additive manufacturing, and more particularly, to a fixture for an object to be built on during additive manufacturing. The fixture is removable from the build platform and allows easier post-manufacture processing of the object. The disclosure further relates to a method of additively manufacturing a fixture and an object built on the fixture.

Additive manufacturing (AM) includes a wide variety of processes of producing an object through the successive layering of material rather than the removal of material. As such, additive manufacturing can create complex geometries without the use of any sort of tools, molds or fixtures, and with little or no waste material. Instead of machining components from solid billets of material, much of which is cut away and discarded, the only material used in additive manufacturing is what is required to shape the object.

Additive manufacturing techniques typically include taking a three-dimensional computer aided design (CAD) file of the object to be formed, electronically slicing the object into layers, e.g., 18-102 micrometers thick, and creating a file with a two-dimensional image of each layer. The file may then be loaded into a preparation software system that interprets the file such that the object can be built by different types of additive manufacturing systems. In 3D printing, rapid prototyping (RP), and direct digital manufacturing (DDM) forms of additive manufacturing, material layers are selectively dispensed to create the object.

In metal powder additive manufacturing techniques, such as selective laser melting (SLM) and direct metal laser melting (DMLM), metal powder layers are sequentially melted together to form the object. More specifically, fine metal powder layers are sequentially melted after being uniformly distributed using an applicator on a metal powder bed. The metal powder bed can be moved in a vertical axis. The process takes place in a processing chamber having a precisely controlled atmosphere of inert gas, e.g., argon or nitrogen. Once each layer is created, each two dimensional slice of the object geometry can be fused by selectively melting the metal powder. The melting may be performed by a high powered laser such as a 100 Watt ytterbium laser to fully weld (melt) the metal powder to form a solid metal. The laser moves in the X-Y direction using scanning mirrors, and has an intensity sufficient to fully weld (melt) the metal powder to form a solid metal. The metal powder bed is lowered for each subsequent two dimensional layer, and the process repeats until the object is completely formed.

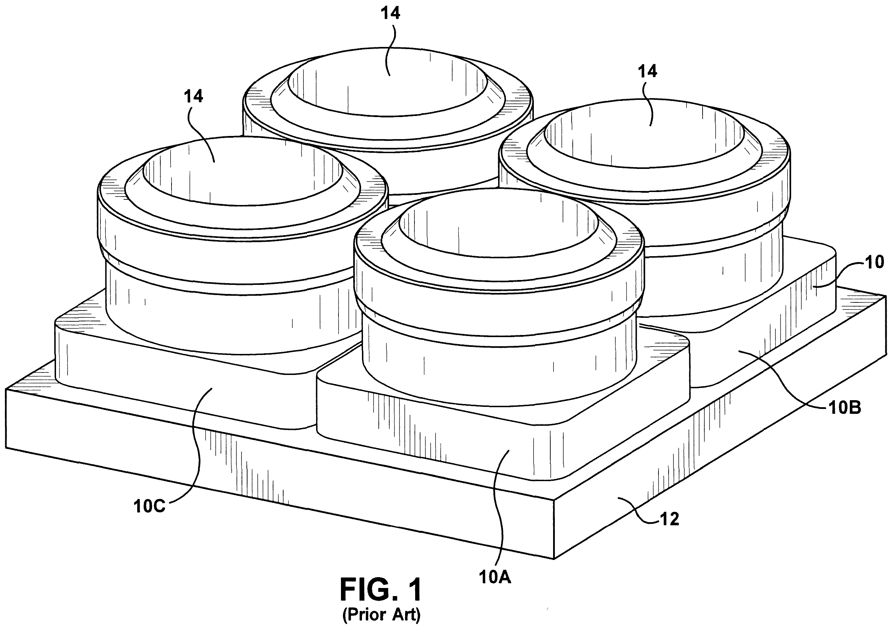

Larger scale, multi-laser DMLM systems are foreseen to play a major role in the introduction of DMLM into serial production. In these systems, a number of objects may be additively manufactured directly on a build platform. Alternatively, as shown in FIG. 1, one or more large substrate plates 10 may be positioned on a build platform 12, and object(s) 14 built on the substrate plate(s). In any event, build platform 12 or a single large substrate plate 10 are often too heavy for simple manual handling, and require lifting devices like cranes or fork lifts. The use of the crane or fork lifts makes the entry and removal processes from the DMLM system slow and cumbersome. Further, build platform 12 or substrate plate 10 size and weight oftentimes makes it difficult to perform post manufacture processing. Post manufacture processing can vary, but may include, for example: radiographic scanning (computerized tomography (CT) or X-ray scans), visual inspections, heat treatments, flow tests, vibration application to remove powder, electro-discharge machining (EDM) removal of the object from the plate, and other machining. More specifically, rotating build platform 12 or substrate plate 10 to accommodate any post-manufacturing steps can be very difficult. For a single large component, use of build platform 12 alone or a single large substrate 10 plate is unavoidable. However, when several smaller components are built in one process, as shown in FIG. 1, an advantage in handling can be gained by subdividing substrate plate 10 into smaller plates, e.g., segmented into portions 10A-C, which can then be dismounted individually from build platform 12. Current substrate plates 10 are screwed to build platform 12 or another substrate coupled to build platform 12 prior to the DMLM. While current substrate plates 10 are smaller than build platform 12, they are generic, solid blocks of material that have very simple, solid block structure, e.g., square (as shown) or round. Accordingly, they are still very heavy, and must be removed before post manufacture processing can occur.

EP 2 848 335 A1 describes a method and apparatus for repairing a component, like a turbine blade, the apparatus comprising a carrier and fastening devices for fastening components to the carrier. The fastening devices include rail-shaped receiving grooves that extend across the carrier and are each designed to receive and firmly engage base ends of a plurality of the components.

US 2016/0318257 A1 describes a method and apparatus for manufacturing or repairing a part, wherein a fixture for retaining the part is built using an additive manufacturing apparatus on a build plate retained in a set position within the additive manufacturing apparatus, the part is mounted to the fixture and material is consolidated onto the part by the additive manufacturing apparatus, when the build plate, with the fixture and part attached hereto, is retained in the set position.

US 2016/0031010 A1 describes an additive manufacturing apparatus that includes a movable platform which has a plurality of fasteners and an upper surface. The additive manufacturing device indexes the additively manufactured parts and generates additively manufactured parts on the upper surface of the movable platform together with sacrificial layers which are grown underneath the additively manufactured parts and are designed to be cut off from a finished additively manufactured part. The movable platform with the additively manufactured parts thereon is transferred to a subtractive manufacturing apparatus to perform subtractive processing, such as milling, grinding, or cutting, on the additively manufactured parts and to then separate the movable platform from the sacrificial layers and from the finished additively manufactured parts.

WO 2017/093591 A1 describes an additive manufacturing apparatus comprising a support plate for supporting objects to be additively manufactured, wherein the support plate is located between a base disc and an upper annular ring which serve to increase the rigidity of the assembly. Precision threaded pins fix the position of the support plate with respect to the base disc and the upper annular ring. At least one reference geometry element, which is placed on the support plate, allows to obtain a position reference for the additive manufacturing.

US 2010/0034983 A1 describes an apparatus for additive manufacturing objects from a metallic powder, comprising a fixture for supporting the objects, wherein the fixture includes a substrate plate which is attached to a rigid installation plate by bolting. The assembly consisting of the substrate and the installation plate is then attached to a movable table of the additive manufacturing apparatus by means of bolts which are inserted through through-holes provided in the substrate and the installation plate and fixed to the table.

EP 3 095 538 B1 discloses a fixture for re-machining a semifinished product obtained by selective laser melting, the semifinished product comprising a plurality of three-dimensional objects, wherein a plurality of connecting or interlocking arms is positioned between the three-dimensional objects to create a reticular structure. Some of the connecting or interlocking arms comprise fixing sockets at their free ends, which are bolted to fixing holes provided in an annular gripping equipment so as to hold the plurality of three-dimensional objects in a freely suspended manner.

US 2015/352770 A1 describes a method for producing screw elements using a selective laser melting process, in which a metallic powder material is arranged step by step in layers in the direction of a production axis on a work platform one over the other and each layer of powder material is irradiated using a laser beam. In addition to a screw element, supporting structures are melted into the layers to support the screw element during production. The supporting structures are configured in a honeycomb shape.

US 2015/056321 A1 discloses a fixture including a partition plate for use on a working platform to support an object during a 3D printing process. The partition plate includes openings arranged in an array and running entirely through the partition plate from its lower to its upper surface supporting the object. In one embodiment, the partition plate is laminated and includes two detachable layers. The layers may be detached from each other to remove solidified residues from the 3D printing process, which may accumulate in the partition plate openings.

DE 10 2014 112 446 A1 discloses a fixture including a porous plate-shaped structure, e.g., a perforated metallic plate, which allows a particle material to fall through the porous plate-shaped structure and into a powder material collecting device located therebelow.

EP 3 012 062 A2 discloses a fixture apparatus comprising a body including a structure having variable stiffness along at least one axis. The structure may be formed by a plurality of elongated support members on a substrate, which provides a backing plate for the support members, wherein the support members form a plurality of cross links therebetween. The fixture apparatus may be manufactured using a 3D printer and, in some embodiments, may be integrally printed together with an object to be manufactured.

### BRIEF DESCRIPTION OF THE INVENTION

A first aspect of the invention provides a fixture for supporting an object on a build platform of an additive manufacturing (AM) system, the fixture being suitable to support an object, which is to be additively manufactured thereon, during its building process and comprising: a body having a hollow portion therein, an upper surface shaped to support the object to be additively manufactured thereon by the AM system and a lower portion configured to be supported on the build platform of the AM system. The hollow portion includes a plurality of vanes that define passages extending entirely through the body from the lower portion to the upper surface of the body and provide line of sight and access from the lower portion to a lowermost portion of an object allowing a post-manufacturing process through the hollow portion of the body, when the object is supported on the upper surface of the body. The fixture is additively manufactured and an object is additively manufactured so as to lay upon the upper surface and adhere to the fixture, wherein the fixture and the object are obtained by an additive metal powder melting process. The upper surface includes a sacrificial cutting layer at an uppermost extent thereof and interposed between the fixture and the object, the sacrificial cutting layer having a thickness configured for cutting by a cutting tool to remove the fixture from the object, the sacrificial cutting layer formed by an additive metal powder melting process using adjusted AM system parameters so as to have a lower density than the additively manufactured object.

A second aspect of the invention provides a method, comprising: additively manufacturing a fixture on a build platform of an additive manufacturing (AM) system, the fixture being suitable to support an object, which is to be additively manufactured thereon, during its building process, the fixture including a body having a hollow portion therein, an upper surface shaped to support an object to be manufactured thereon by the AM system and a lower portion configured to be supported on the build platform of the AM system, wherein the hollow portion includes a plurality of vanes that define passages extending entirely through the body from the lower portion to the upper surface of the body and provide line of sight and access to a lowermost portion of an object allowing a post-manufacturing process through the hollow portion of the body, when the object is supported on the upper surface of the body; additively manufacturing a sacrificial cutting layer at an uppermost extent of the upper surface, the sacrificial cutting layer having a thickness configured for cutting by a cutting tool to remove the fixture from the object; and additively manufacturing the object on the sacrificial cutting layer, the object affixing to the fixture; wherein the fixture, the object and the sacrificial cutting layer are obtained by an additive metal powder melting process, and wherein the sacrificial cutting layer is formed by additive manufacturing using adjusted AM system parameters so as to have a lower density than the additively manufactured object.

A third aspect of the invention provides a non-transitory computer readable storage medium comprising instructions which, when executed by a computerized additive manufacturing (AM) system, carry out the method mentioned before.

The illustrative aspects of the present invention are designed to solve the problems herein described and/or other problems not discussed.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a perspective view of a conventional build platform of an additive manufacturing (AM) system with a number of objects formed thereon.
FIG. 2 shows a block diagram of an additive manufacturing system and process including a non-transitory computer readable storage medium storing code representative of a fixture according to embodiments of the invention.
FIG. 3 shows a perspective view of a number of fixtures and objects on a build platform according to embodiments of the invention.
FIG. 4 shows a top perspective view of a fixture according to embodiments of the invention.
FIG. 5 shows a bottom perspective view of a fixture with an object thereon according to embodiments of the invention.
FIG. 6 shows a bottom plan view of a fixture with an object according to embodiments of the disclosure.
FIG. 7 shows a perspective view of a number of fixtures and objects being removed from a build platform according to embodiments of the invention.
FIG. 8 shows an enlarged perspective view of a sacrificial cutting layer between a fixture and an object according to embodiments of the invention.
FIG. 9 shows a top perspective view of a single fixture and object on a build platform according to an alternative embodiment of the invention.
FIG. 10 shows a top perspective view of the fixture of FIG. 9.
FIG. 11 shows a bottom view of the fixture of FIG. 9.
FIG. 12 shows a top perspective view of the object of FIG. 9.
FIG. 13 a top perspective view of a number of fixtures and objects on a build platform according to another alternative embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

As indicated above, the invention provides a fixture for use in additively manufacturing an object. The fixture includes a body having an upper surface shaped to support the object to be manufactured thereon by the additive manufacturing (AM) system and a lower portion configured to be supported on a build platform of the AM system. The body includes a hollow portion therein, which makes the fixture lighter and enables post-manufacturing processes to be carried out with the fixture attached to the object. The fixture can be initially additively manufactured with the object, but can also be removed and reused for building subsequent objects. The fixture can also be customized to match a shape of an object, and may include a variety of structures to provide access to the part therethrough, e.g., for removal of un-melted raw material. Since the fixture and object are affixed when removed from the AM system, the fixtures allow simultaneous post-manufacturing processing of multiple objects.

As used herein, additive manufacturing (AM) may include any process of producing an object through the successive layering of material rather than the removal of material, which is the case with conventional processes. Additive manufacturing can create complex geometries without the use of any sort of tools, molds or fixtures, and with little or no waste material. Instead of machining components from solid billets of plastic or metal, much of which is cut away and discarded, the only material used in additive manufacturing is what is required to shape the part. Additive manufacturing processes used in the present invention are additive metal powder melting processes, like selective laser melting (SLM) or direct metal laser melting (DMLM). In the current setting, DMLM using metal powders has been found advantageous.

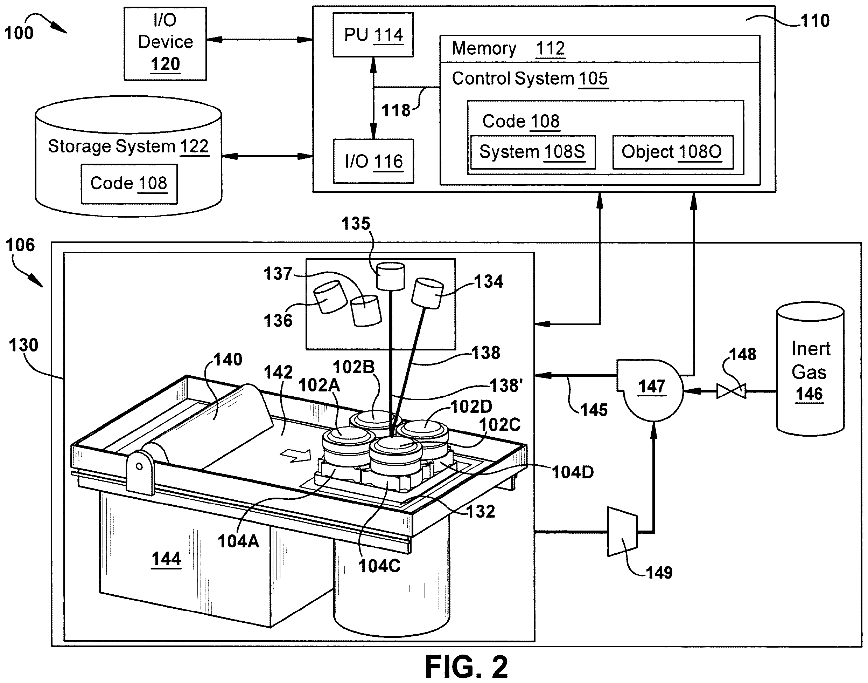

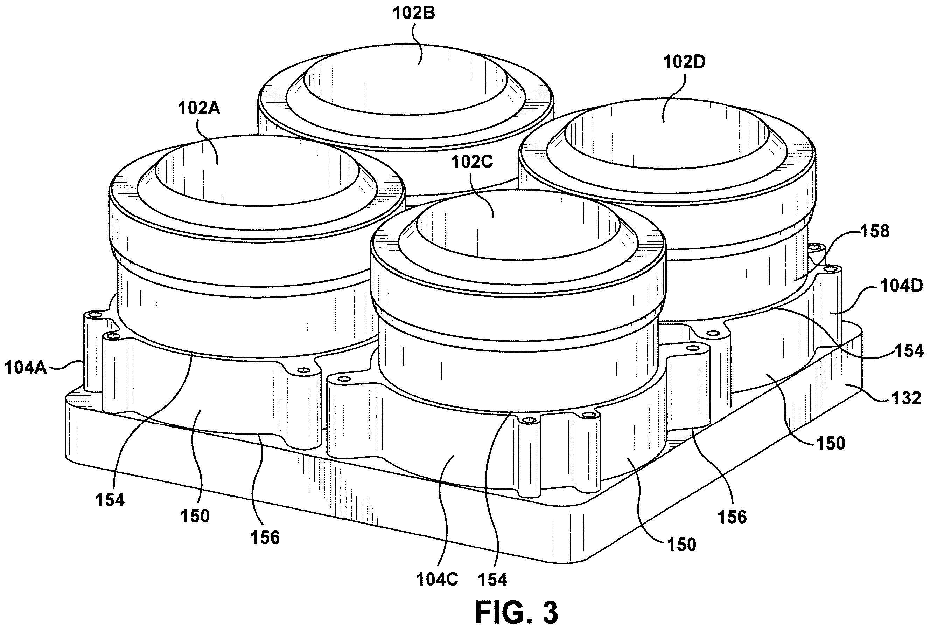

To illustrate an example of an additive manufacturing process, FIG. 2 shows a schematic/block view of an illustrative computerized additive manufacturing (AM) system 100 for generating objects 102A-D and fixture 104A-D (B not shown) for use therewith. FIG. 3 shows one example of a set of objects 102A-D and corresponding fixtures 104A-D matching those of FIG. 2. It is emphasized that while four objects 102A-D with four corresponding fixtures 104A-D are shown in some of the figures, any number of objects 102, including one, can be made with a corresponding fixture 104 according to embodiments of the invention.

Computerized metal powder AM system 100 (hereinafter simply "AM system 100") may include multiple melting beam sources 134, 135, 136, 137. In this example, AM system 100 is arranged for direct metal laser melting (DMLM). It is understood that the general teachings of the invention are equally applicable to other forms of metal powder additive manufacturing such as but not limited to selective laser melting (SLM), and perhaps other forms of additive manufacturing. Objects 102A-D are each illustrated as a circular element; however, it is understood that the additive manufacturing process can be readily adapted to manufacture practically any part. Fixtures 104A-D (104B hidden in FIG. 3) are shown supporting respective objects 102A-D. As understood, objects 102A-D need not be identical. Further, corresponding fixtures 104A-D can be customized for each object 102A-D, as will be described further herein.

AM system 100 generally includes a metal powder additive manufacturing control system 105 ("control system") and an AM printer 106. AM system 100, as will be described, executes code 108 that includes a set of computer-executable instructions defining objects 102A-D to physically generate the objects using AM printer 106 using multiple melting beam sources 134, 135, 136, 137. Further, AM system 100 may execute code 120 (with that for objects 102A-D or separate) that includes a set of computer-executable instructions defining fixtures 104A-D to physically generate the fixtures alone, or generate the fixtures with set of objects 102A-D, using AM printer 106. Alternatively, fixture(s) 104A-D may be pre-formed in another AM process, remounted to build platform 132 and used to build new objects 102A-D thereon. In the example shown, four melting beam sources may include four lasers. However, the teachings of the invention are applicable to any melting beam source, e.g., an electron beam, laser, etc.

Control system 105 is shown implemented on computer 110 as computer program code. To this extent, computer 110 is shown including a memory 112 and/or storage system 122, a processor unit (PU) 114, an input/output (I/O) interface 116, and a bus 118. Further, computer 110 is shown in communication with an external I/O device/resource 120 and a storage system 122. In general, processor unit (PU) 114 executes computer program code 108 that is stored in memory 112 and/or storage system 122. While executing computer program code 108, processor unit (PU) 114 can read and/or write data to/from memory 112, storage system 122, I/O device 120 and/or AM printer 106. Bus 118 provides a communication link between each of the components in computer 110, and I/O device 120 can comprise any device that enables a user to interact with computer 110 (e.g., keyboard, pointing device, display, etc.). Computer 110 is only representative of various possible combinations of hardware and software. For example, processor unit (PU) 114 may comprise a single processing unit, or be distributed across one or more processing units in one or more locations, e.g., on a client and server. Similarly, memory 112 and/or storage system 122 may reside at one or more physical locations. Memory 112 and/or storage system 122 can comprise any combination of various types of non-transitory computer readable storage medium including magnetic media, optical media, random access memory (RAM), read only memory (ROM), etc. Computer 110 can comprise any type of computing device such as an industrial controller, a network server, a desktop computer, a laptop, a handheld device, etc.

As noted, AM system 100 and, in particular control system 105, executes code 108 to generate objects 102A-D and/or fixtures 104A-D (e.g., FIG. 3). Code 108 can include, *inter alia*, a set of computer-executable instructions 108S (herein also referred to as 'code 108S') for operating AM printer 106, and a set of computer-executable instructions 108O (herein also referred to as 'code 108O') defining objects 102A-D and/or fixtures 104A-D (e.g., FIG. 3) to be physically generated by AM printer 106. As described herein, additive manufacturing processes begin with a non-transitory computer readable storage medium (e.g., memory 112, storage system 122, etc.) storing code 108. Set of computer-executable instructions 108S for operating AM printer 106 may include any now known or later developed software code capable of operating AM printer 106.

Set of computer-executable instructions or code 108O defining objects 102A-D and/or fixtures 104A-D (e.g., FIG. 3) may include a precisely defined 3D model of an object and can be generated from any of a large variety of well-known computer aided design (CAD) software systems such as AutoCAD^{®}, TurboCAD^{®}, DesignCAD 3D Max, etc. In this regard, code 108O can include any now known or later developed file format. Furthermore, code 108O representative of objects 102A-D and/or fixtures 104A-D (e.g., FIG. 3) may be translated between different formats. For example, code 108O may include Standard Tessellation Language (STL) files which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 108O representative of objects 102A-D and/or fixtures 104A-D (e.g., FIG. 3) may also be converted into a set of data signals and transmitted, received as a set of data signals and converted to code, stored, etc., as necessary. Code 108O may be configured according to embodiments of the invention to allow for formation of border and internal sections in overlapping field regions, as will be described. In any event, code 108O may be an input to AM system 100 and may come from a part designer, an intellectual property (IP) provider, a design company, the operator or owner of AM system 100, or from other sources. In any event, control system 105 executes code 108S and 108O, dividing objects 102A-D and/or fixtures 104A-D (e.g., FIG. 3) into a series of thin slices that are assembled using AM printer 106 in successive layers of material.

AM printer 106 may include a processing chamber 130 that is sealed to provide a controlled atmosphere for object 102 printing. A build platform 132, upon which objects 102A-D and/or fixtures 104A-D (e.g., FIG. 3) is/are built, is positioned within processing chamber 130. A number of melting beam sources 134, 135, 136, 137 are configured to melt layers of metal powder on build platform 132 to generate objects 102A-D and/or fixtures 104A-D (e.g., FIG. 3). While four melting beam sources 134, 135, 136, 137 will be described herein, it is emphasized that the teachings of the invention are applicable to a system employing any number of sources, e.g., 1, 2, 3, or 5 or more. Each melting beam source 134, 135, 136, 137 may have a field including a non-overlapping field region in which it can exclusively melt metal powder, and at least one overlapping field region in which two or more sources can melt metal powder. In this regard, each melting beam source 134, 135, 136, 137 may generate a melting beam (two shown, 138, 138', in FIG. 2), respectively, that fuses particles for each slice, as defined by code 108O. For example, in FIG. 2, melting beam source 134 is shown creating a layer of object 102 using melting beam 138 in one region, while melting beam source 135 is shown creating a layer of object 102 using melting beam 138' in another region. Each melting beam source 134, 135, 136, 137 is calibrated in any now known or later developed manner. That is, each melting beam source 134, 135, 136, 137 has had its laser or electron beam's anticipated position relative to build platform 132 correlated with its actual position in order to provide an individual position correction (not shown) to ensure its individual accuracy. In one embodiment, each of plurality melting beam sources 134, 135, 136, 137 may create melting beams, e.g., 138, 138' (FIG. 2), having the same cross-sectional dimensions (e.g., shape and size in operation), power and scan speed.

Referring to FIG. 2, an applicator 140 may create a thin layer of raw material 142 spread out as the blank canvas from which each successive slice of the final object will be created. Various parts of AM printer 106 may move to accommodate the addition of each new layer, e.g., a build platform 132 may lower and/or chamber 130 and/or applicator 140 may rise after each layer. The process may use different raw materials in the form of fine-grain metal powder, a stock of which may be held in a chamber 144 accessible by applicator 140. In the instant case, objects 102A-D and/or fixtures 104A-D (e.g., FIG. 3) may be made of a metal which may include a pure metal or an alloy. In one example, the metal may include practically any non-reactive metal powder, i.e., non-explosive or non-conductive powder, such as but not limited to: a cobalt chromium molybdenum (CoCrMo) alloy, stainless steel, an austenite nickel-chromium based alloy such as a nickel-chromium-molybdenum-niobium alloy (NiCrMoNb) (e.g., Inconel 625 or Inconel 718), a nickel-chromium-iron-molybdenum alloy (NiCrFeMo) (e.g., Hastelloy^{®} X available from Haynes International, Inc.), or a nickel-chromium-cobalt-molybdenum alloy (NiCrCoMo) (e.g., Haynes 282 available from Haynes International, Inc.), etc.

Processing chamber 130 is filled with an inert gas such as argon or nitrogen and controlled to minimize or eliminate oxygen. Control system 105 is configured to control a flow of a gas mixture 145 within processing chamber 130 from a source of inert gas 146. In this case, control system 105 may control a pump 147, and/or a flow valve system 148 for inert gas to control the content of gas mixture 145. Flow valve system 148 may include one or more computer controllable valves, flow sensors, temperature sensors, pressure sensors, etc., capable of precisely controlling flow of the particular gas. Pump 147 may be provided with or without valve system 148. Where pump 147 is omitted, inert gas may simply enter a conduit or manifold prior to introduction to processing chamber 130. Source of inert gas 146 may take the form of any conventional source for the material contained therein, e.g. a tank, reservoir or other source. Any sensors (not shown) required to measure gas mixture 145 may be provided. Gas mixture 145 may be filtered using a filter 149 in a conventional manner.

In operation, build platform 132 with metal powder thereon is provided within processing chamber 130, and control system 105 controls flow of gas mixture 145 within processing chamber 130 from source of inert gas 146. Control system 105 also controls AM printer 106, and in particular, applicator 140 and melting beam sources 134, 135, 136, 137 to sequentially melt layers of metal powder on build platform 132 to generate objects 102A-D and/or fixtures 104A-D (e.g., FIG. 3) according to embodiments of the invention.

Subsequent to additive manufacture thereof, each object 102 may be exposed to any variety of post-manufacturing processes either separated from a corresponding fixture 104 or attached to a corresponding fixture 104. As used herein, "post-manufacturing processes" may include but are not limited to: radiographic scanning (computerized tomography (CT) or X-ray scans), visual inspections, heat treatments, flow tests, vibration application to remove powder, electro-discharge machining (EDM) removal of the object from the fixture, sealing, polishing, assembly to another part, and other machining.

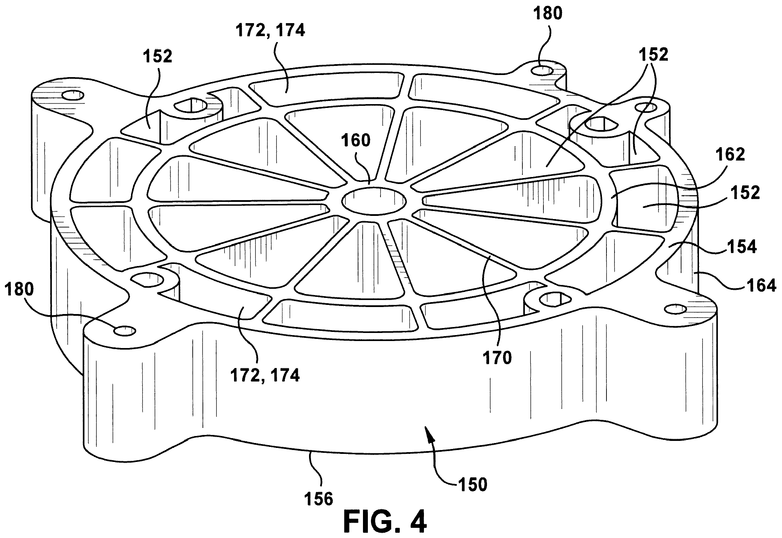

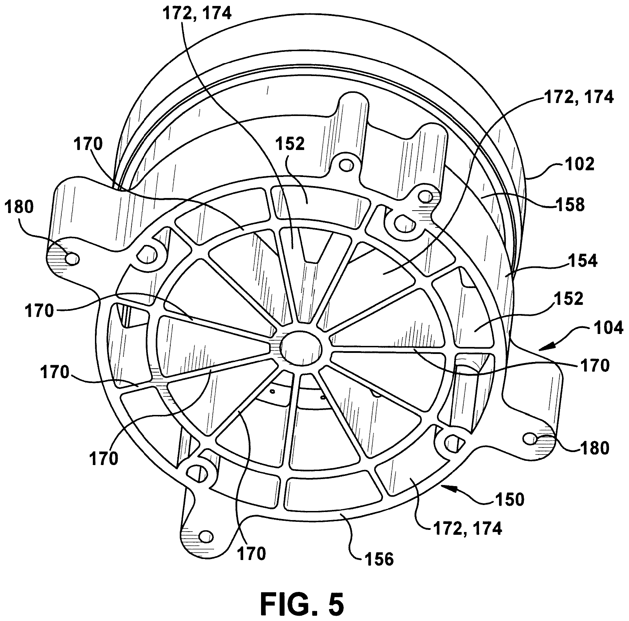

Referring to FIGS. 3-6, one embodiment of a fixture 104 for supporting object 102 on build platform 132 of AM system 100 will now be described in greater detail. A fixture 104 includes a body 150 having a hollow portion 152 therein. Further, body 150 has an upper surface 154 (FIG. 4) shaped to support object 102 to be manufactured thereon by AM system 100, and a lower portion 156 configured to be supported on build platform 132 (FIG. 2) of AM system 100. As shown in FIGS. 4-6, hollow portion 152 is not a simple opening or passage in or through body 150, but a large void. Hollow portion 152 is large enough to allow access to object 102, e.g., line of sight to object 102 from lower portion 156 or line of sight to at least the back side of upper surface 154 allowing post-manufacture inspection, and allowing removal of unused metal powder. Further, hollow portion 152 makes fixture 104 lighter than a conventional solid block substrate, easing movement of object 102 during post-manufacturing processing. As used herein, fixture 104 being "supported on" build platform 132 may include fixture 104 being mounted directly to build platform 132 or to an optional support structure (not shown) on build platform 132.

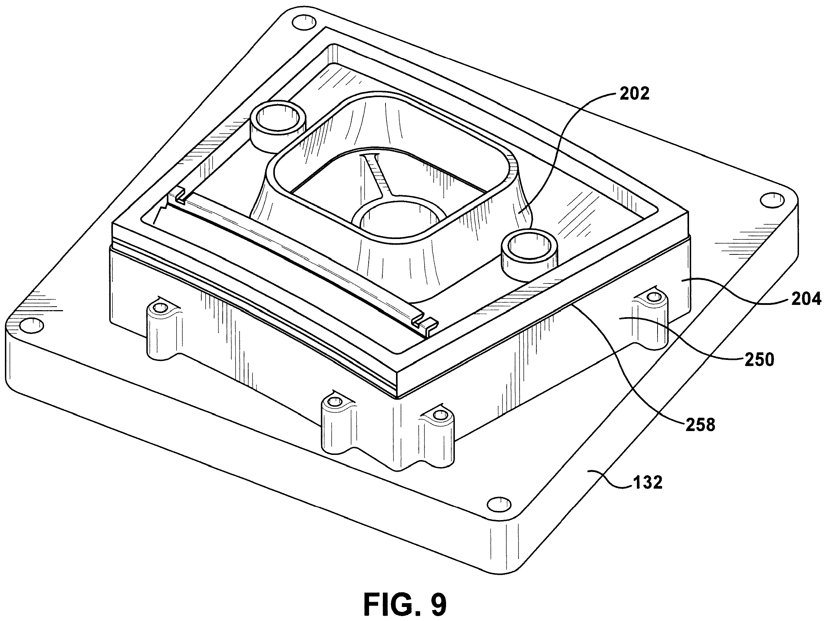

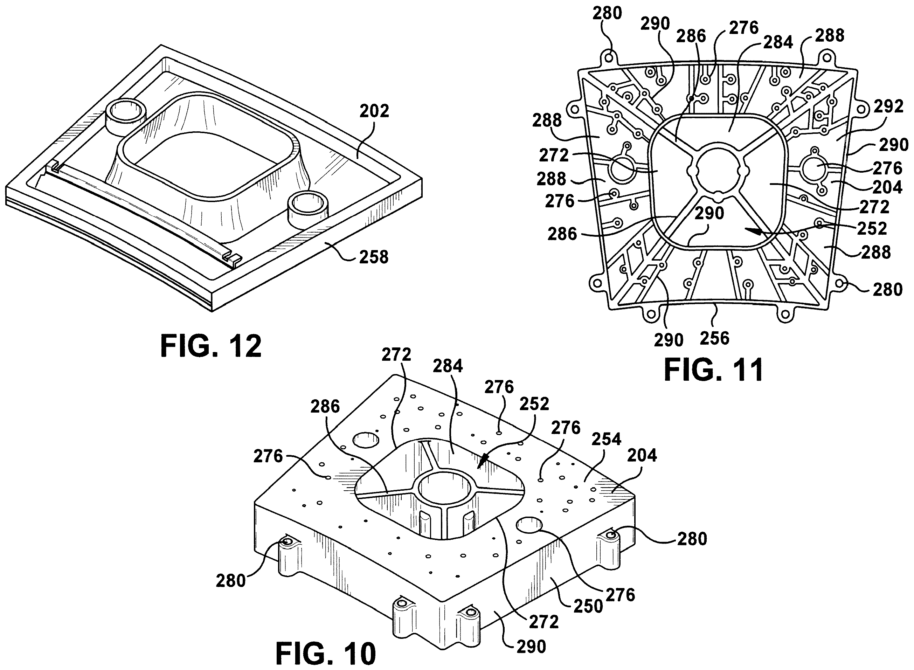

Body 150 can be shaped and sized to accommodate any form of corresponding object 102 that it is intended to support. In some embodiments, like in FIGS. 3-6, a web of thin members may be sufficient to support object 102, and in other embodiments, like in FIGS. 9 and 10, a broad upper surface 254 may be desired. In any event, as shown for example in FIGS. 3, 5 and 6, an exterior shape of body 150 may correspond to a lowermost portion 158 of object 102. As used herein, "correspond" indicates lower portion 156 of fixture 104 has at the very least a close similarity to lowermost portion 158 of object 102 and may match or agree almost exactly to lowermost portion 158 of object 102. In any event, exterior shape of body 150 acts to support object 102 and accommodates positioning of additional fixtures 104 on build platform 132.

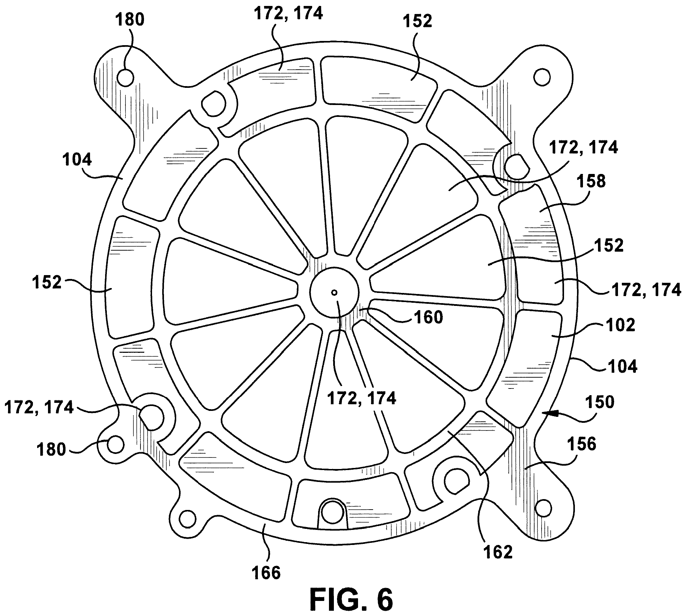

Upper surface 154 of body 150 may also correspond to lowermost portion 158 of object 102. As observed in FIG. 6, upper surface 154 does not necessarily have to match exactly lowermost portion 158 of object 102, although in some cases, it may match.

Hollow portion 152 may take a variety of forms within body 150, depending on the shape of body 150 and the size of object 102. In the FIGS. 3-6 example, body 150 has a substantially circular exterior shape to correspond to the round shape of object 102. Note, lowermost portion 158 of object 102 may not be perfectly round. In FIGS. 4-6, body 150 includes a number of concentric, circular walls 160, 162, 164. Further, in this example, hollow portion 152 includes a plurality of structural supports 170, i.e., webs, to support body 150, i.e., circular walls 160, 162, 164. In this fashion, hollow portion 152 also includes a plurality of vanes 172 that provide access to lowermost portion 158 of object 102. In this embodiment, as shown best in FIG. 6, vanes 172 may also act as metal powder removal passages 174 that extend through upper surface 154 to object 102. Metal powder removal passages 174 are advantageous for removing un-melted metal powder from within object 102 through fixture 104. Certain metal powder removal passages 174 may be positioned to allow metal powder removal from an otherwise inaccessible area of object 102. In any event, structural supports 170 are provided in a manner to provide sufficient stiffness of fixture 104 to avoid excessive deformation of objects 102 during build up. At the same time, fixtures 104 are ideally kept as open as possible to ensure sufficient access to the bottom of objects 102 after detachment from build platform 132 once the build process is finished and in order to keep the weight of object-fixture assembly as low as possible.

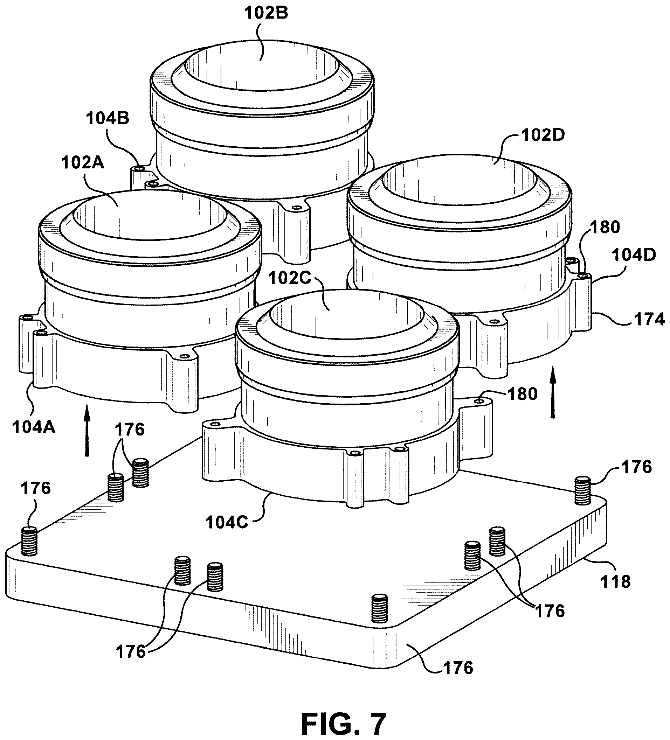

Body 150 may also include at least one releasable fastener receiver 180. Each releasable fastener receiver 180 is configured to selectively receive a fastener 176 (FIG. 7) to couple body 150, i.e., fixture 104, to build platform 132. Initially, fixture 104 is manufactured on build platform 132 prior to object 102 being formed on fixture 104, i.e., using additive manufacturing. In this case, fixture 104 may be built with releasable fastener receiver(s) 180 for use when fixture 104 is later reused, as shown in FIG. 7. Subsequent to removal from object(s) 102 that were initially built with fixture 104, fixture 104 may be reused to build additional object(s) 102 thereon. In this latter case, fixture 104 may be supported on build platform 132 by being coupled to the build platform by fastener(s) 176 extending from build platform 132. In the FIGS. 3-7 embodiment, fastener 176 may take the form of threaded fasteners, e.g., bolts, extending through holes in build platform 132 so as to mate with releasable fastener receivers 180 in body 150 of one or more fixtures 104. It is emphasized that the releasable fastener 176 may take a variety of alternative forms such as but not limited to: simple posts on build platform 132 that mate with holes in body 150 or pivotal armatures or clamps on build platform 132 that mate with a surface on body 150.

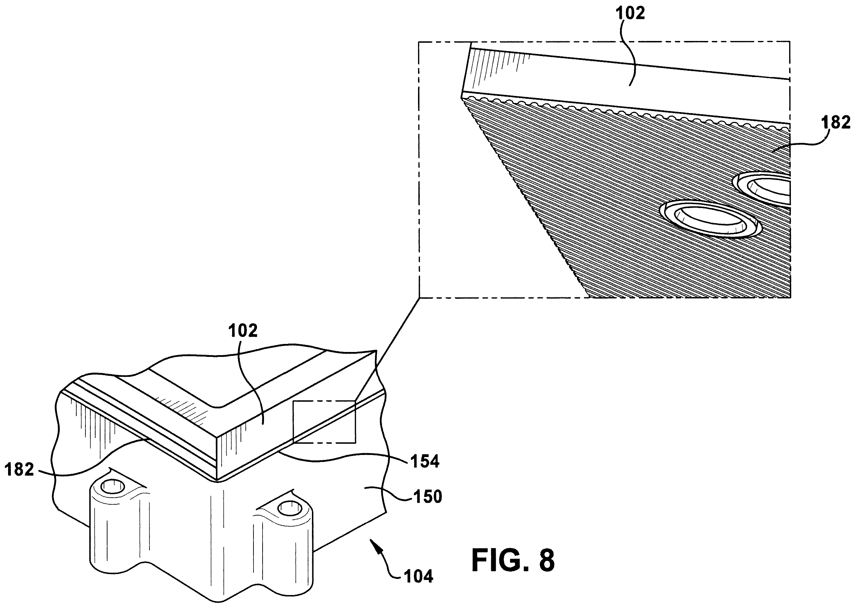

Referring to FIG. 8, upper surface 154 includes a sacrificial cutting layer 182 at an uppermost extent thereof. Sacrificial cutting layer 182 has a thickness configured for cutting by a cutting tool such as but not limited to: an electro discharge system cutting tool (not shown) or a band saw, to remove fixture 104 from object 102. In one embodiment, sacrificial cutting layer 182 may be porous or have a lower density than object 102 such that it is easier to cut. In this case, a porous sacrificial cutting layer 182 may be formed by adjusting AM system 100 parameters to create a less dense layer. It is also understood that while not shown, upper surface 154 may also include any now known or later developed sacrificial support structures for supporting one or more portions of object 102 (e.g., overhangs, hollow elements, etc.) during additive manufacture such as but not limited to: pillars, support walls, breakable supports, removable supports, etc.

In operation, a method according to embodiments of the invention may include supporting fixture 104 on build platform 132 of AM system 100. As used herein, the supporting may include either building fixture 104 directly on build platform 132 or on a support structure (not shown) on build platform 132, i.e., in either case, no previously built fixture 104 is available. That is, the supporting of fixture 104 includes additively manufacturing fixture 104 prior to additively manufacturing object 102 on fixture 104. Additive manufacturing may include using DMLM. Alternatively, the supporting may also include mounting an already-formed fixture 104 on build platform 132, e.g., using releasable fastener(s) 176 (FIG. 7), as previously described. As noted, fixture 104 includes body 150 having hollow portion 152 therein and an upper surface 154 shaped to support object 102 to be manufactured thereon by AM system 100.

Next, AM system 100 additively manufactures object 102 on upper surface 154 of fixture 104 with object 102 affixing to fixture 104. That is, object 102 and fixture 104 are sufficiently adhered to one another that they can be treated as a single element. As noted, before AM system 100 starts forming object 102 on fixture 104, it additively manufactures sacrificial cutting layer 182 (FIG. 8) on fixture 104 so object 102 can be more readily removed from fixture 104 later. As shown in FIG. 7, once object 102 is built, object 102 can be removed from AM system 100 with fixture 104 affixed thereto. Fixture 104 can be removed from build platform using any now known or later developed process, e.g., cutting where initially build on the platform or removing the releasable fasteners 176 (Fig. 7). Due to the lighter nature of fixtures 104, no cranes or forklifts are necessary to remove objects 102 from AM system 100.

At this stage, at least one post-manufacturing process may be performed on object 102 with fixture 104 affixed to object 102. As previously noted, "post-manufacturing processes" may include but are not limited to: radiographic scanning (computerized tomography (CT) or X-ray scans), visual inspections, heat treatments, flow tests, vibration application to remove powder, electro-discharge machining (EDM) removal of the object from the fixture, sealing, polishing, assembly to another part, and other machining. One post-manufacturing process in particular may include accessing object 102 through hollow portion 152 of body 150, e.g., as shown in FIG. 6. This accessing of object 102 is not available using conventional, solid block substrates. This accessing may include visual inspections, or may include using powder removal passage(s) 174 extending through upper surface 154 for removing un-melted metal powder from within object 102 through fixture 104. Metal powder may be removed by, for example, rotating, vibrating or applying a vacuum, to object 102 and fixture 104. Fixtures 104 attached to object 102 also makes possible simultaneous post-manufacture processing of multiple objects.

After performing the at least one post-manufacturing process, fixture 104 may be removed from object 102. Fixture 104 may be removed from object 102 using any now known or later developed technique such as but not limited to electric discharge cutting or band-saw cutting, using the additively manufactured sacrificial cutting layer 182 (FIG. 8). That is, fixture 104 is removed from object 102 by cutting through the sacrificial cutting layer 182 (FIG. 8). As noted, one advantage of fixture 104 is that, after removing fixture 104 from object 102, e.g., after performing the at least one post-manufacturing process, fixture 104 may be reused to additively manufacture another object 102 using AM system 100. That is, fixture 104 may be re-supported on build platform 132 and another object 102 built thereon. For purposes of reusing fixtures 104, each fixture 104 has an identical height, i.e., relative to build platform 132. Further, during removal of fixtures 104 from objects 102, care should be taken to ensure fixtures 104 for a particular object 102 retain the identical height so that additive manufacture of new objects 102 while reusing fixtures 104 can start at the same plane relative to build platform 132.

While the methods described herein may be explained in terms of a singular object 102 and fixture 104, it is emphasized that the teachings of the invention can be applied so that many objects 102 and fixtures 104 are formed/used simultaneously during any given build on a build platform 132. That is, the supporting of fixture 104 on build platform 132 may include supporting a plurality of fixtures 104A-D (see, e.g., FIGS. 3 and 7 (104B hidden in FIG. 7)) on build platform 132, and additively manufacture includes manufacturing a plurality of objects 102A-D, one object on each fixture.

Referring to FIGS. 9-12, another embodiment of a fixture 204 for additively manufacturing an object 202 is shown. In this embodiment, teachings of the invention are applied to a single, larger object 202. Here, fixture 204 is also larger. Fixture 204 includes a body 250 having a hollow portion 252 (FIG. 12) therein. Further, body 250 has an upper surface 254 (FIG. 10) shaped to support object 202 to be manufactured thereon by AM system 100, and a lower portion 256 (FIG. 11) configured to be supported on build platform 132 (FIG. 2) of AM system 100. Here, upper surface 254 takes the form of a broader surface than in the FIGS. 3-6 embodiment. Here also, hollow portion 252 includes an open area 284 in a center of body 250 with structural support(s) 286 (as in FIGS. 3-6), and also a pocket area 288 (FIG. 11) under upper surface 254 formed by a variety of walls 290 extending from a back side 292 of upper surface 254. Hollow portion 252 is large enough to allow line of sight to object 202 from lower portion 256 (like FIGS. 3-6), or, as shown in FIG. 11, line of sight to at least a back side 292 of upper surface 254 (in pocket area 288). In this fashion, hollow portion 252 also includes a plurality of vanes 272 that provide access to lowermost portion 258 of object 202. In this embodiment, as shown best in FIG. 11, vanes 272 may also act as metal powder removal passages that extend through upper surface 254 to object 202. As shown in FIGS. 10 and 11, this embodiment may also include a number of additional metal powder removal passages 276 extending through upper surface 254. Metal powder removal passages 274, 276 are advantageous for removing un-melted metal powder from within object 202 through fixture 204. Certain metal powder removal passages 274, and in particular, certain passages 276 may be positioned to allow metal powder removal from an otherwise inaccessible area of object 202. Metal powder removal passages 276 that are smaller may be formed/supported by walls 290, as shown in FIG. 11.

Body 250 can be shaped and sized to accommodate any form of corresponding object 202 that it is intended to support. In this embodiment, upper surface 254 is a broader surface so as to support the larger object 202. An exterior shape of body 250 may correspond to a lowermost portion 258 of object 202. Upper surface 254 does not necessarily have to match exactly lowermost portion 258 of object 202, although in some cases, it may match.

Hollow portion 252 may take a variety of forms within body 250, depending on the shape of body 250 and the size of object 202. In the FIGS. 9-12 example, body 250 has a substantially trapezoid exterior shape to correspond to the trapezoid shape of object 202. Similar to FIG. 7, body 250 may include one or more releasable fastener receivers 280 configured to selectively receive a fastener (not shown) to couple body 250, i.e., fixture 204, to build platform 132. Walls 290, structural supports 286 and releasable fastener receiver(s) 280 may terminate in a common lowermost plane of body 250 for mating with planar build platform 132.

As in the previously described embodiment, fixture 204 is manufactured on build platform 132 prior to object 202 being formed on fixture 204, or can be mounted to build platform 132 for reuse. As in FIG. 8, upper surface 254 includes a sacrificial cutting layer 182 at an uppermost extent thereof.

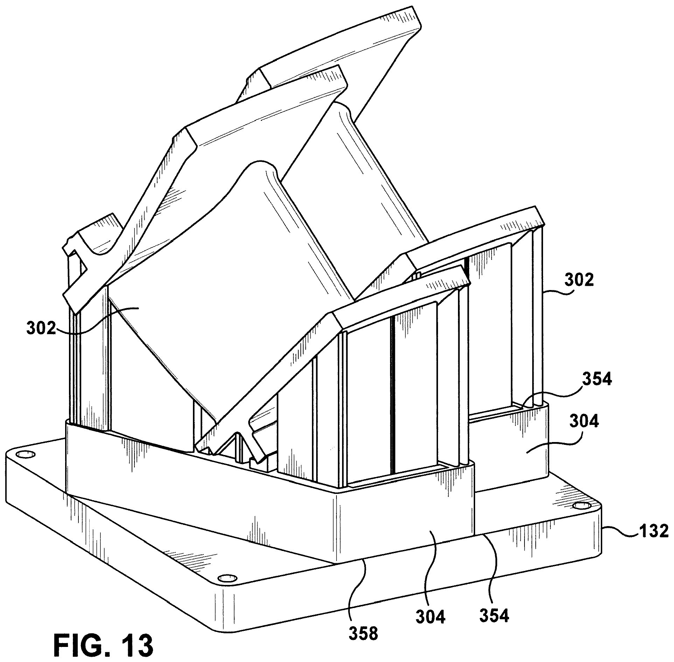

Referring to FIG. 13, another embodiment of a fixture 304 for additively manufacturing an object 302 is shown. In this embodiment, teachings of the invention are applied to a pair of large objects 302, some of which are provided to accommodate additive manufacturing but may be removed as part of post-manufacture processing. Here, upper surface 354 takes the form of a broader surface than in the FIGS. 3-6 embodiment. Body 350 can be shaped and sized to accommodate any form of corresponding object 302 that it is intended to support. In this embodiment, upper surface 354 is a broader surface so as to support the larger object 302. An exterior shape of body 350 may correspond to a lowermost portion 358 of object 302. As shown, upper surface 354 does not necessarily have to match exactly lowermost portion 358 of object 302, although in some cases, it may match. Here, fixture 304 has rectangular shape to accommodate rectangular objects 302.

Embodiments of the invention provide an object customized fixture for additive manufacture (e.g., DMLM) builds in, for example, large multi-laser AM systems. Instead of building objects directly onto a simple substrate plate or the build platform, more advanced fixtures are either mounted to a build platform or supports on the build platform, and the objects are built on top of these advanced fixtures by DMLM. The fixtures allow leaner post-manufacturing processes by simplifying handling (one piece flow), and allowing different objects form the same build to be processed simultaneously. Further, the fixtures can be built additively and reused. To simplify part handling dedicated fixtures can be designed and built for particular objects. The fixtures are designed to allow the attachment of all necessary support structures and object faces that would usually be attached directly to the build platform. The fixtures are lighter than just sub-dividing a conventional solid block substrate and thus allow quicker system setup with no need for a crane to load a heavy substrate plate. The fixtures also allow access to the object to provide, for example, more efficient powder removal from the object (lowering the scrap rate due to insufficient powder removal), and visual inspection of the object immediately after the build.

The foregoing drawings show some of the processing associated according to several embodiments of this invention. In this regard, each drawing or block within a flow diagram of the drawings represents a process associated with embodiments of the method described. It should also be noted that in some alternative implementations, the acts noted in the drawings or blocks may occur out of the order noted in the figure or, for example, may in fact be executed substantially concurrently or in the reverse order, depending upon the act involved. Also, one of ordinary skill in the art will recognize that additional blocks that describe the processing may be added.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

## Claims

1. A fixture (104, 204, 304) for supporting an object (102, 202, 302) on a build platform (132) of an additive manufacturing (AM) system, the fixture (104, 204, 304) being suitable to support an object (102, 202, 302), which is to be additively manufactured thereon, during its building process and comprising:
a body (150, 250) having a hollow portion (152, 252) therein, an upper surface (154, 254) shaped to support the object (102, 202, 302) to be additively manufactured thereon by the AM system and a lower portion (156, 256) configured to be supported on the build platform (132) of the AM system;
wherein the hollow portion (152, 252) includes a plurality of vanes (172, 272) that define passages (174, 274) extending entirely through the body (150, 250) from the lower portion (156, 256) to the upper surface (154, 254) of the body (150, 250) and provide line of sight and access from the lower portion (156, 256) to a lowermost portion (158, 258) of an object (102, 202, 302) allowing a post-manufacturing process through the hollow portion (152, 252) of the body (150, 250), when the object (102, 202, 302) is supported on the upper surface (154, 254) of the body (150, 250);
wherein the fixture (104, 204, 304) is additively manufactured and an object (102) is additively manufactured so as to lay upon the upper surface (154, 254) and adhere to the fixture (104, 204, 304), the fixture (104, 204, 304) and the object (102, 202, 302) obtained by an additive metal powder melting process;
wherein the upper surface (154, 254) includes a sacrificial cutting layer (182) at an uppermost extent thereof and interposed between the fixture (104, 204, 304) and the object (102), the sacrificial cutting layer (182) having a thickness configured for cutting by a cutting tool to remove the fixture (104, 204, 304) from the object (102, 202, 302),
the sacrificial cutting layer (182) formed by an additive metal powder melting process using adjusted AM system (100) parameters so as to have a lower density than the additively manufactured object (102).

2. The fixture (104, 204, 304) of claim 1, wherein the body (150, 250) includes at least one releasable fastener receiver (180, 280), each at least one releasable fastener receiver (180, 280) configured to selectively receive a fastener to couple the body (150, 250) to the build platform (132).

3. The fixture (104, 204, 304) of claim 1, wherein the hollow portion (152, 252) includes a plurality of structural supports (170, 286) to support the body (150, 250).

4. The fixture (104, 204, 304) of claim 1, wherein an exterior shape of the body (150, 250) corresponds to a lowermost portion (258, 358) of the object (102, 202, 302).

5. The fixture (104, 204, 304) of claim 1 obtained by direct metal powder laser melting, further comprising at least one metal powder removal passage extending through the upper surface (154, 254) of the body (150, 250) to the object for removing un-melted metal powder from within the object through the fixture (104, 204, 304).

6. A method, comprising:
additively manufacturing a fixture (104, 204, 304) on a build platform (132) of an additive manufacturing (AM) system, the fixture (104, 204, 304) being suitable to support an object (102, 202, 302), which is to be additively manufactured thereon, during its building process, the fixture (104, 204, 304) including a body (150, 250) having a hollow portion (152, 252) therein, an upper surface (154, 254) shaped to support an object (102, 202, 302) to be manufactured thereon by the AM system and a lower portion (156, 256) configured to be supported on the build platform (132) of the AM system, wherein the hollow portion (152, 252) includes a plurality of vanes (172, 272) that define passages (174, 274) extending entirely through the body (150, 250) from the lower portion (156, 256) to the upper surface (154, 254) of the body (150, 250) and provide line of sight and access to a lowermost portion (158, 258) of an object (102, 202, 302) allowing a post-manufacturing process through the hollow portion (152, 252) of the body (150, 250), when the object (102, 202, 302) is supported on the upper surface (154, 254) of the body (150, 250);
additively manufacturing a sacrificial cutting layer (182) at an uppermost extent of the upper surface (154, 254), the sacrificial cutting layer (182) having a thickness configured for cutting by a cutting tool to remove the fixture (104, 204, 304) from the object (102, 202, 302); and
additively manufacturing the object (102, 202, 302) on the sacrificial cutting layer (182), the object (102, 202, 302) affixing to the fixture (104, 204, 304);
wherein the fixture (104, 204, 304), the object (102, 202, 302) and the sacrificial cutting layer (182) are obtained by an additive metal powder melting process,
wherein the sacrificial cutting layer (182) is formed by additive manufacturing using adjusted AM system (100) parameters so as to have a lower density than the additively manufactured object (102).

7. The method of claim 6, further comprising:
removing the object (102, 202, 302) with the fixture (104, 204, 304) affixed thereto from the AM system; and
performing at least one post-manufacturing process on the object with the fixture (104, 204, 304) affixed to the object (102, 202, 302), the at least one post-manufacturing process including accessing the object (102, 202, 302) through the hollow portion (152, 252) of the body (150, 250).

8. The method of claim 6 further comprising removing the fixture (104, 204, 304) from the object (102, 202, 302) after performing the at least one post-manufacturing process.

9. The method of claim 6, the method further comprising removing the fixture (104, 204, 304) from the object (102, 202, 302) after performing the at least one post-manufacturing process, and reusing the fixture (104, 204, 304) to additively manufacture another object (102, 202, 302) using the AM system.

10. The method of claim 6, wherein an exterior shape of the body (150, 250) corresponds to a lowermost portion (258, 358) of the object (102, 202, 302).

11. The method of claim 6, further comprising removing the fixture (104, 204, 304) from the object (102, 202, 302) by cutting through the sacrificial cutting layer (182).

12. The method of claim 6, wherein the supporting the fixture (104, 204, 304) on the build platform (132) includes supporting a plurality of fixtures (104, 204, 304) on the build platform (132), and the additively manufacturing the object (102, 202, 302) includes additively manufacturing a plurality of objects (102, 202, 302), one object (102, 202, 302) on each fixture (104, 204, 304), wherein each fixture (104, 204, 304) has an identical height.

13. A non-transitory computer readable storage medium comprising instructions which, when executed by a computerized additive manufacturing (AM) system, carry out the method of claim 6.

## Patentansprüche

1. Halterung (104, 204, 304) zum Stützen eines Objekts (102, 202, 302) auf einer Bauplattform (132) eines additiven Fertigungssystems (AM), wobei die Halterung (104, 204, 304) geeignet ist, ein Objekt (102, 202, 302), das darauf additiv gefertigt werden soll, während seines Bauprozesses zu stützen, und Folgendes umfasst:
einen Körper (150, 250) mit einem hohlen Abschnitt (152, 252) darin, einer oberen Oberfläche (154, 254), die so geformt ist, dass sie das Objekt (102, 202, 302) trägt, das darauf durch das AM-System additiv gefertigt werden soll, und einem unteren Abschnitt (156, 256), der so konfiguriert ist, dass er auf der Bauplattform (132) des AM-Systems gestützt wird;
wobei der hohle Abschnitt (152, 252) eine Vielzahl von Schaufeln (172, 272) einschließt, die Durchgänge (174, 274) definieren, die sich vollständig durch den Körper (150, 250) von dem unteren Abschnitt (156, 256) zu der oberen Oberfläche (154, 254) des Körpers (150, 250) erstrecken und eine Sichtlinie und einen Zugang von dem unteren Abschnitt (156, 256) zu einem untersten Abschnitt (158, 258) eines Objekts (102, 202, 302), der einen Nachfertigungsprozess durch den hohlen Abschnitt (152, 252) des Körpers (150, 250) ermöglicht, bereitstellen, wenn das Objekt (102, 202, 302) auf der oberen Oberfläche (154, 254) des Körpers (150, 250) gestützt wird;
wobei die Halterung (104, 204, 304) additiv gefertigt wird und ein Objekt (102) additiv gefertigt wird, um auf der oberen Oberfläche (154, 254) zu liegen und an der Halterung (104, 204, 304) zu haften, wobei die Halterung (104, 204, 304) und das Objekt (102, 202, 302) durch ein additives Metallpulverschmelzverfahren erhalten werden;
wobei die obere Oberfläche (154, 254) eine Opferschneideschicht (182) an einer obersten Ausdehnung davon einschließt und zwischen der Halterung (104, 204, 304) und dem Objekt (102) angeordnet ist, wobei die Opferschneideschicht (182) eine Dicke aufweist, die zum Schneiden durch ein Schneidwerkzeug konfiguriert ist, um die Halterung (104, 204, 304) von dem Objekt (102, 202, 302) zu entfernen,
die Opferschneideschicht (182) durch ein additives Metallpulverschmelzverfahren unter Verwendung angepasster Parameter des AM-Systems (100) gebildet wird, sodass sie eine geringere Dichte als das additiv gefertigte Objekt (102) aufweist.

2. Halterung (104, 204, 304) nach Anspruch 1, wobei der Körper (150, 250) mindestens eine lösbare Befestigungsmittelaufnahme (180, 280) einschließt, wobei jede mindestens eine lösbare Befestigungsmittelaufnahme (180, 280) so konfiguriert ist, dass sie selektiv ein Befestigungsmittel aufnimmt, um den Körper (150, 250) mit der Bauplattform (132) zu koppeln.

3. Halterung (104, 204, 304) nach Anspruch 1, wobei der hohle Abschnitt (152, 252) eine Vielzahl von strukturellen Stützen (170, 286) einschließt, um den Körper (150, 250) zu stützen.

4. Halterung (104, 204, 304) nach Anspruch 1, wobei eine äußere Form des Körpers (150, 250) einem untersten Abschnitt (258, 358) des Objekts (102, 202, 302) entspricht.

5. Halterung (104, 204, 304) nach Anspruch 1, die durch direktes Metallpulverlaserschmelzen erhalten wird und ferner mindestens einen Metallpulver-Entfernungsdurchgang umfasst, der sich durch die obere Oberfläche (154, 254) des Körpers (150, 250) zum Objekt erstreckt, um ungeschmolzenes Metallpulver aus dem Inneren des Objekts durch die Halterung (104, 204, 304) zu entfernen.

6. Verfahren, umfassend:
additives Fertigen einer Halterung (104, 204, 304) auf einer Bauplattform (132) eines additiven Fertigungs- (AM-) Systems, wobei die Halterung (104, 204, 304) geeignet ist, ein Objekt (102, 202, 302), das darauf additiv gefertigt werden soll, während seines Bauprozesses zu stützen, wobei die Halterung (104, 204, 304) einen Körper (150, 250) mit einem hohlen Abschnitt (152, 252) darin, eine obere Oberfläche (154, 254), die so geformt ist, dass sie ein Objekt (102, 202, 302), das darauf durch das AM-System gefertigt werden soll, stützt, und einen unteren Abschnitt (156, 256) aufweist, der so konfiguriert ist, dass er auf der Bauplattform (132) des AM-Systems gestützt wird, wobei der hohle Abschnitt (152, 252) eine Vielzahl von Schaufeln (172, 272) einschließt, die Durchgänge (174, 274) definieren, die sich vollständig durch den Körper (150, 250) von dem unteren Abschnitt (156, 256) zu der oberen Oberfläche (154, 254) des Körpers (150, 250) erstrecken und eine Sichtlinie und einen Zugang zu einem untersten Abschnitt (158, 258) eines Objekts (102, 202, 302) bereitstellen, der einen Nachfertigungsprozess durch den hohlen Abschnitt (152, 252) des Körpers (150, 250) ermöglicht, wenn das Objekt (102, 202, 302) auf der oberen Oberfläche (154, 254) des Körpers (150, 250) gestützt ist;
additives Fertigen einer Opferschneideschicht (182) an einer obersten Ausdehnung der oberen Oberfläche (154, 254), wobei die Opferschneideschicht (182) eine Dicke aufweist, die zum Schneiden durch ein Schneidewerkzeug konfiguriert ist, um die Halterung (104, 204, 304) von dem Objekt (102, 202, 302) zu entfernen; und
additives Fertigen des Objekts (102, 202, 302) auf der Opferschneideschicht (182), wobei das Objekt (102, 202, 302) an der Halterung (104, 204, 304) befestigt wird;
wobei die Halterung (104, 204, 304), das Objekt (102, 202, 302) und die Opferschneideschicht (182) durch ein additives Metallpulverschmelzverfahren erhalten werden,
wobei die Opferschneideschicht (182) durch additives Fertigen unter Verwendung angepasster Parameter des AM-Systems (100) so gebildet wird, dass sie eine geringere Dichte als das additiv gefertigte Objekt (102) aufweist.

7. Verfahren nach Anspruch 6, ferner umfassend:
Entfernen des Objekts (102, 202, 302) mit der Halterung (104, 204, 304), die daran befestigt ist, aus dem AM-System; und
Durchführen mindestens eines Nachfertigungsprozesses an dem Objekt mit der Halterung (104, 204, 304), die an dem Objekt (102, 202, 302) befestigt ist, wobei der mindestens eine Nachfertigungsprozess den Zugang zu dem Objekt (102, 202, 302) durch den hohlen Abschnitt (152, 252) des Körpers (150, 250) einschließt.

8. Verfahren nach Anspruch 6, ferner umfassend das Entfernen der Halterung (104, 204, 304) von dem Objekt (102, 202, 302) nach Durchführung des mindestens einen Nachfertigungsprozesses.

9. Verfahren nach Anspruch 6, wobei das Verfahren ferner das Entfernen der Halterung (104, 204, 304) von dem Objekt (102, 202, 302) nach Durchführung des mindestens einen Nachfertigungsprozesses und die Wiederverwendung der Halterung (104, 204, 304) zur additiven Fertigung eines anderen Objekts (102, 202, 302) unter Verwendung des AM-Systems umfasst.

10. Verfahren nach Anspruch 6, wobei eine äußere Form des Körpers (150, 250) einem untersten Abschnitt (258, 358) des Objekts (102, 202, 302) entspricht.

11. Verfahren nach Anspruch 6, ferner umfassend das Entfernen der Halterung (104, 204, 304) von dem Objekt (102, 202, 302) durch Durchschneiden der Opferschneideschicht (182).

12. Verfahren nach Anspruch 6, wobei das Stützen der Halterung (104, 204, 304) auf der Bauplattform (132) das Stützen einer Vielzahl von Halterungen (104, 204, 304) auf der Bauplattform (132) einschließt und die additive Fertigung des Objekts (102, 202, 302) die additive Fertigung einer Vielzahl von Objekten (102, 202, 302) einschließt, wobei sich ein Objekt (102, 202, 302) auf jeder Halterung (104, 204, 304) befindet, wobei jede Halterung (104, 204, 304) eine identische Höhe aufweist.

13. Nichtflüchtiges computerlesbares Speichermedium, das Anweisungen umfasst, die, wenn sie von einem computergestützten additiven Fertigungs- (AM-) System ausgeführt werden, das Verfahren nach Anspruch 6 ausführen.

## Revendications

1. Fixation (104, 204, 304) pour supporter un objet (102, 202, 302) sur une plate-forme de construction (132) d'un système de fabrication additive (FA), la fixation (104, 204, 304) étant adaptée pour supporter un objet (102, 202, 302), qui doit être fabriqué de manière additive sur celle-ci, pendant son processus de construction et comprenant :
un corps (150, 250) ayant une partie creuse (152, 252) à l'intérieur de celui-ci, une surface supérieure (154, 254) profilée pour supporter l'objet (102, 202, 302) à fabriquer de manière additive sur celle-ci par le système de FA et une partie inférieure (156, 256) configurée pour être supportée sur la plate-forme de construction (132) du système de FA ;
dans laquelle la partie creuse (152, 252) inclut une pluralité de palettes (172, 272) qui définissent des passages (174, 274) s'étendant entièrement à travers le corps (150, 250) depuis la partie inférieure (156, 256) à la surface supérieure (154, 254) du corps (150, 250) et fournissent une ligne de visée et un accès depuis la partie inférieure (156, 256) à une partie la plus basse (158, 258) d'un objet (102, 202, 302) permettant un processus de post-fabrication à travers la partie creuse (152, 252) du corps (150, 250), lorsque l'objet (102, 202, 302) est supporté sur la surface supérieure (154, 254) du corps (150, 250) ;
dans laquelle la fixation (104, 204, 304) est fabriquée de manière additive et un objet (102) est fabriqué de manière additive de sorte à reposer sur la surface supérieure (154, 254) et adhérer à la fixation (104, 204, 304), la fixation (104, 204, 304) et l'objet (102, 202, 302) obtenus par un processus de fusion de poudre de métal additif ;
dans laquelle la surface supérieure (154, 254) inclut une couche de coupe sacrificielle (182) au niveau d'une étendue la plus haute de celle-ci et interposée entre la fixation (104, 204, 304) et l'objet (102), la couche de coupe sacrificielle (182) ayant une épaisseur configurée pour une coupe par un outil de coupe pour retirer la fixation (104, 204, 304) de l'objet (102, 202, 302),
la couche de coupe sacrificielle (182) formée par un processus de fusion de poudre de métal additif en utilisant des paramètres ajustés de système de FA (100) de sorte à avoir une densité inférieure à celle de l'objet fabriqué de manière additive (102).

2. Fixation (104, 204, 304) selon la revendication 1, dans laquelle le corps (150, 250) inclut au moins un récepteur d'attache amovible (180, 280), chaque au moins un récepteur d'attache amovible (180, 280) configuré pour recevoir sélectivement une attache pour coupler le corps (150, 250) à la plate-forme de construction (132).

3. Fixation (104, 204, 304) selon la revendication 1, dans laquelle la partie creuse (152, 252) inclut une pluralité de supports structurels (170, 286) pour supporter le corps (150, 250).

4. Fixation (104, 204, 304) selon la revendication 1, dans laquelle un profil extérieur du corps (150, 250) correspond à une partie la plus basse (258, 358) de l'objet (102, 202, 302).

5. Fixation (104, 204, 304) selon la revendication 1 obtenue par fusion laser directe de poudre de métal, comprenant en outre au moins un passage de retrait de poudre de métal s'étendant à travers la surface supérieure (154, 254) du corps (150, 250) jusqu'à l'objet pour retirer la poudre de métal non fondue de l'intérieur de l'objet à travers la fixation (104, 204, 304).

6. Procédé, comprenant :
la fabrication additive d'une fixation (104, 204, 304) sur une plate-forme de construction (132) d'un système de fabrication additive (FA), la fixation (104, 204, 304) étant appropriée pour supporter un objet (102, 202, 302), qui doit être fabriqué de manière additive sur celle-ci, pendant son processus de construction, la fixation (104, 204, 304) incluant un corps (150, 250) ayant une partie creuse (152, 252) dans celui-ci, une surface supérieure (154, 254) profilée pour supporter un objet (102, 202, 302) qui doit être fabriqué sur celle-ci par le système de FA et une partie inférieure (156, 256) configurée pour être supportée sur la plate-forme de construction (132) du système de FA, dans laquelle la partie creuse (152, 252) inclut une pluralité de palettes (172, 272) qui définissent des passages (174, 274) s'étendant entièrement à travers le corps (150, 250) depuis la partie inférieure (156, 256) à la surface supérieure (154, 254) du corps (150, 250) et fournissent une ligne de visée et un accès à une partie la plus basse (158, 258) d'un objet (102, 202, 302) permettant un processus de post-fabrication à travers la partie creuse (152, 252) du corps (150, 250), lorsque l'objet (102, 202, 302) est supporté sur la surface supérieure (154, 254) du corps (150, 250) ;
la fabrication additive d'une couche de coupe sacrificielle (182) au niveau d'une étendue la plus haute de la surface supérieure (154, 254), la couche de coupe sacrificielle (182) ayant une épaisseur configurée pour une coupe par un outil de coupe pour retirer la fixation (104, 204, 304) de l'objet (102, 202, 302) ; et
la fabrication additive de l'objet (102, 202, 302) sur la couche de coupe sacrificielle (182), l'objet (102, 202, 302) étant fixé à la fixation (104, 204, 304) ;
dans laquelle la fixation (104, 204, 304), l'objet (102, 202, 302) et la couche de coupe sacrificielle (182) sont obtenus par un processus de fusion de poudre de métal additif,
dans laquelle la couche de coupe sacrificielle (182) est formée par une fabrication additive en utilisant des paramètres ajustés de système de FA (100) de sorte à avoir une densité inférieure à celle de l'objet fabriqué de manière additive (102).

7. Procédé selon la revendication 6, comprenant en outre :
le retrait de l'objet (102, 202, 302) avec la fixation (104, 204, 304) fixée à celui-ci du système de FA ; et
la réalisation d'au moins un processus de post-fabrication sur l'objet avec la fixation (104, 204, 304) fixée à l'objet (102, 202, 302), l'au moins un processus de post-fabrication incluant un accès à l'objet (102, 202, 302) à travers la partie creuse (152, 252) du corps (150, 250).

8. Procédé selon la revendication 6 comprenant en outre le retrait de la fixation (104, 204, 304) de l'objet (102, 202, 302) après la réalisation de l'au moins un processus de post-fabrication.

9. Procédé selon la revendication 6, le procédé comprenant en outre le retrait de la fixation (104, 204, 304) de l'objet (102, 202, 302) après la réalisation de l'au moins un processus de post-fabrication, et la réutilisation de la fixation (104, 204, 304) pour fabriquer de manière additive un autre objet (102, 202, 302) en utilisant le système de FA.

10. Procédé selon la revendication 6, dans lequel un profil extérieur du corps (150, 250) correspond à une partie la plus basse (258, 358) de l'objet (102, 202, 302).

11. Procédé selon la revendication 6, comprenant en outre le retrait de la fixation (104, 204, 304) de l'objet (102, 202, 302) par une coupe à travers la couche de coupe sacrificielle (182).

12. Procédé selon la revendication 6, dans lequel le soutien de la fixation (104, 204, 304) sur la plate-forme de construction (132) inclut le soutien d'une pluralité de fixations (104, 204, 304) sur la plate-forme de construction (132), et la fabrication additive de l'objet (102, 202, 302) inclut la fabrication additive d'une pluralité d'objets (102, 202, 302), un objet (102, 202, 302) sur chaque fixation (104, 204, 304), dans lequel chaque fixation (104, 204, 304) a une hauteur identique.

13. Support de stockage non transitoire lisible par ordinateur comprenant des instructions qui, lorsqu'elles sont exécutées par un système de fabrication additive (FA) informatisé, mettent en œuvre le procédé selon la revendication 6.
